# EUROPÄISCHE PATENTSCHRIFT

(11) **EP 1 789 304 B1**
(45) Veröffentlichungstag und Bekanntmachung des Hinweises auf die Patenterteilung: **02.12.2009**
(21) Anmeldenummer: 05792543.0
(22) Anmeldetag: 15.09.2005
(51) Int. Cl.: B62B 7/10

(54) **ZUSAMMENKLAPPBARES GESTELL FÜR EINEN KINDERWAGEN**
COLLAPSIBLE FRAME FOR A PUSHCHAIR
CHASSIS DE POUSSETTE PLIANT

(30) Priorität: 15.09.2004 DE 202004014474 U
(43) Veröffentlichungstag der Anmeldung: 30.05.2007
(73) Patentinhaber: Endepro GmbH, 96257 Redwitz a.d.R. (DE)
(72) Erfinder: POPP, Alexander, 96257 Redwitz (DE)
(74) Vertreter: Küchler, Stefan
(86) Internationale Anmeldenummer: PCT/EP2005/009922
(87) Internationale Veröffentlichungsnummer: WO 2006/029859

(56) Entgegenhaltungen:
- DE-A1- 4 025 009

## Beschreibung

Die Erfindung richtet sich auf ein zusammenklappbares Gestell für einen Kinderwagen mit einem mehrere Räder aufweisenden Fahrgestell und einem den Aufbau, insbesondere einen Sitz, Schale, Tasche od. dgl. für Kinder, tragenden Rahmen sowie einer dazwischen angeordneten Klappmechanik, die wenigstens zwei zueinander parallele Lenker aufweist, welche nach Art eines Parallellenkers an dem Fahrgestell einerseits und an dem Tragrahmen andererseits angelenkt sind.

Bei handelsübliche Kinderwagen ist der Klappmechanismus als Scherenmechanismus ausgebildet, d.h., an jeder Seite des Kinderwagens befinden sich zwei Streben, die sich nach Art einer Schere oder eines X überkreuzen und in ihrem Kreuzungspunkt gelenkig miteinander verbunden sind. Durch Auseinanderschwenken einer solchen Schere wird der Kinderwagens auseinandergeklappt und ist sodann betriebsbereit. Zusammengelegt werden kann er durch Zusammenschwenken der beiden Scherenstreben.

Eine Scherenmechanik verlangt einerseits die Lösbarkeit wenigstens eines Scherenendes an jeder Seite des Kinderwagens, entweder von dem Tragrahmen oder Fahrgestell. Wenn eine solche, lösbare Verbindung an dem Tragrahmen für den Aufbau oder das Fahrgestell nicht zuverlässig hergestellt wird, so kann der Klappmechanismus instabil werden und im schlimmsten Fall das Zusammenbrechen des Kinderwagens während der Benutzung auslösen.

In der deutschen Patentschrift DE 40 25 009 C2 welche den nächstliegenden Stand der Technik bildet, wird ein Gestell für einen Kinderwagen beschrieben, mit einem Fahrgestell und einem Sitz, die über zwei seitliche Parallelogrammgestänge miteinander verbunden sind, so dass der Sitz beim Zusammenklappen nicht kippt, sondern seine Orientierung im Raum beibehält. Aufgrund der dortigen Ausgestaltung der Parallelogrammgestänge erfährt der herunterklappende Sitz auch eine erhebliche Verlagerung in Fahrtrichtung und steht in zusammengelegtem Zustand erheblich über das Fahrgestell über Andererseits ist ein möglichst kleiner Platzbedarf in zusammengelegtem Zustand ein maßgebender Faktor eines guten Klappmechanismus, um einen Kinderwagen bspw. in einem beengten Kofferraum verstauen und transportieren zu können. Daraus resultiert das Problem, einen Klappmechanismus zu schaffen, der ein Zusammenlegen auf kleinstem Raum ermöglicht.

Die Lösung dieses Problems gelingt bei einem gattungsgemäßen Gestell dadurch, dass die einander entsprechenden (oberen bzw. unteren) Anlenkpunkte der etwa in einer gemeinsamen Ebene liegenden Lenker in vertikaler Richtung stärker gegeneinander versetzt sind als in horizontaler Richtung, so dass die Verbindungslinie zwischen diesen Anlenkpunkten relativ steil ist, im Grenzfall etwa vertikal. Demnadch schließt die Verbindungslinie zwischen den Anlenkpunkten der etwa in einer gemeinsamen Ebene liegenden Lenker an dem Fahrgestell mit der horizontalen Aufstandsebene der Räder einen größeren Winkel ein als mit der lotrecht zu dieser Ebene verlaufenden Vertikalen.

Die Erfindung impliziert dabei einerseits, dass der Tragrahmen in sich weitgehend starr ausgebildet ist, also nicht zusammenklappt, sowie andererseits, dass die Lenker des Parallelogrammgestänges bzw. die Abstände zwischen jeweils den beiden Anlenkpunkten eines Lenkers annähernd identische Länge haben, so dass die Verbindungslinie zwischen den oberen Anlenkpunkten der etwa in einer gemeinsamen Ebene liegenden Lenker stets etwa parallel zu der Verbindungslinie zwischen den unteren Anlenkpunkten dieser Lenker des Parallelogrammgestänges bleibt. Ferner existieren bevorzugt wenigstens zwei zueinander parallele Lenker an jeder Seite des Kinderwagens, also bevorzugt zwei zueinander parallele Lenkerpaare.

Indem der gegenseitige Abstand und die geometrische Relativanordnung der oberen Anlenkpunkte sämtlicher (Trag-) Lenker identisch ist mit den entsprechenden Parametern ihrer unteren Anlenkpunkte, verlaufen sämtliche Aufbau-Tragrahmen und Fahrgestell verbindenden Streben bzw. (Trag-) Lenker stets parallel zueinander. Dadurch bewegt sich der Tragrahmen und damit auch der Aufbau beim Herabschwenken wie auch beim Auseinanderfalten auf einer Kreisbahn, deren Mittelpunkt sich im Bereich der unteren Anlenkpunkte der Parallellenker befindet, und deren Radius durch die (identische) Länge aller zueinander parallelen Lenker definiert ist. Eine solche, wohldefinierte Kreisbahn verleiht dem Klappmechanismus während eines gesamten Klappvorgangs ein hohes Maß an Präzision, und undefinierte Zwischenpositionen werden vermieden. Auf eine gesondert zu betätigende Arretierungsstrebe, die nicht parallel zu den Traglenkern sein müßte, kann, wie weiter unten ausgeführt wird, zumeist verzichtet werden.

Außerdem haben Parallellenker gegenüber einem Scherenmechanismus den weiteren Vorteil, dass während des Zusammenlegens oder Auseinanderfaltens ohne zusätzliche Führungen eine beständige Horizontalausrichtung des oberen Tragrahmens gewährleistet ist.

Bei einem Parallellenker-Gestänge können alle Streben einer Seite des Kinderwagens in einer gemeinsamen Ebene liegen, ohne sich zu überkreuzen. Dadurch reduziert sich die Breite des Gestänges und demzufolge auch ggf. die Breite des Fahrgestells. Dadurch ist allerdings auch der kinematisch mögliche Verschwenkbereich eines Parallelogrammgestänges auf einen Winkel von etwas weniger als 180° eingeschränkt. Dieser wird etwa begrenzt durch die Verbindungsgerade zwischen den einander entsprechenden (oberen bzw. unteren) Anlenkpunkte der etwa in einer gemeinsamen Ebene liegenden Lenker.

Da bei der Anordnung nach der DE 40 25 009 C2 die unteren (und auch die oberen) Anlenkpunkte der beiden Lenker an einer Seite des Gestells etwa auf der selben Höhe liegen, erstreckt sich der zulässige Schwenkwinkel dabei in einer vertikalen Mittelebene des Kinderwagens etwa von einem Strahl in Fahrtrichtung bis zu einem Strahl entgegen der Fahrtrichtung. In beiden Endpositionen einer solchen (erweiterten) Schwenkbewegung liegen auf der selben Höhe; die maximale Höhendifferenz ergibt sich vielmehr gegenüber der um etwa 90° hochgeschwenkten Mittelposition. Daher wird bei dieser vorbekannten Konstruktion der maximale Verschwenkwinkel eines ebenen Parallelogrammgestänges von etwa 180° überhaupt nicht genutzt, vielmehr überstreichen dort die Lenker beim Zusammenklappen von der vollständig ausgeklappten Position bis in die vollständig zusammengelegte Stellung gerade mal einen Winkel von 60°. Dies wiederum hat einerseits zur Folge, dass die maximal erreichbare Höhendifferenz kleiner oder bestenfalls gleich ist zu dem Abstand der Anlenkpunkte eines Lenkers, während andererseits die Ausschöpfung dieser maximal erreichbaren Höhendifferenz der Aufsatz beim Zusammenklappen gegenüber dem Fahrgestell zusätzlich einen seitlichen Versatz um eben diesen Abstandswert in Fahrtrichtung erfährt und also nicht auf das Fahrgestell herabgeklappt wird, sondern daneben.

Indem nach der Lehre der Erfindung die einander entsprechenden (oberen bzw. unteren) Anlenkpunkte der etwa in einer gemeinsamen Ebene liegenden Lenker in vertikaler Richtung stärker gegeneinander versetzt sind als in horizontaler Richtung, ist die Verbindungslinie zwischen diesen Anlenkpunkten relativ steil, im Grenzfall etwa vertikal. Dies hat zur der Folge, dass die beiden Begrenzungsstrahlen des maximalen Verschwenkwinkels zwischen den beiden Endpositionen des Parallelogrammgestänges nicht auf der selben Höhe liegen, sondern in vertikaler Richtung deutlich gegeneinander versetzt sind. Das Parallelogrammgestänge kann daher um nahezu 180° verschwenkt werden. Die erfindungsgemäße Anlenkung erlaubt es den Lenkern des Parallelogrammgestänges, zwischen ein- und ausgeklapptem Zustand des Kinderwagengestells einen Schwenkwinkel von mehr als 120°, vorzugsweise von mehr als 135°, insbesondere von mehr als 150°, zu überstreichen. Dies hat zur Folge, dass der vertikale Abstand zwischen aus- und eingeklappter Position des Tragrahmens deutlich größer ist als der horizontale Abstand. Im Idealfall, hat der Tragrahmen in seiner unteren Position keine horizontale Verschiebung gegenüber seiner oberen Position. Außerdem kann der vertikale Abstand zwischen beiden Positionen größer sein als die Länge eines Lenkers bzw. der Abstand zwischen den beiden Anlenkpunkten eines Lenkers, nämlich etwa bis zu dem doppelten Wert des letzteren. Daher müssen die Parallelogrammlenker bei vergleichbarer Hubhöhe des Klappmechanismus nur halb so lang ausgebildet werden wie bei der DE 40 25 009 C2, der Klappmechanismus wird also viel zierlicher als bei vorbekannten Konstruktionen, und das Gestänge wird vereinfacht und beansprucht selbst weniger Raum.

Wenn die horizontalen Außenabmessungen (Länge, Breite) des Tragrahmens kleiner sind als die entsprechenden Innenabmessungen einer Ausnehmung in der Oberseite des Fahrgestells, so ist die Grundfläche des Aufsatz-Tragrahmens kleiner als die Grundfläche des Fahrgestellrahmens. Dadurch kann/könnte der Aufsatz-Tragrahmen beim Zusammenklappen des Kinderwagengestells vollständig in oder unter die Ebene des Fahrgestells herabschwenken und ggf. in dieses eintauchen.

Um dieses Eintauchen zu ermöglichen, sollte sich der Tragrahmen zwischen den Lenkern befinden.

Indem außerdem der parallel zu einer Radachse gemessene Abstand zwischen zwei Lenkern an gegenüberliegenden Seiten des Kinderwagengestells kleiner ist als der entsprechend gemessene Abstand zwischen zwei etwa in Fahrtrichtung verlaufenden, seitlichen Verstrebungen des Fahrgestells, ist in dem Fahrgestell eine Ausnehmung geschaffen, in weicher der Aufsatz-Tragrahmen beim Zusammenklappen Platz finden kann.

Die erfindungsgemäße Klappmechanik ist damit in die Lage versetzt, derart weit zu verschwenken, dass die nicht an dem Fahrgestell angelenkten Enden der Lenker sich in ausgeklapptem Zustand des Kinderwagengestells oberhalb ihrer Anlenkpunkte an dem Fahrgestell befinden, in eingeklapptem Zustand dagegen unterhalb dieser Anlenkpunkte. Im Idealfall kann der Aufsatz-Tragrahmen daher bis knapp oberhalb der Aufstandsfläche der Räder herabgeschwenkt werden; in zusammengeklapptem Zustand wird daher der Raum zwischen den Rädern des Kinderwagens optimal genutzt.

Es hat sich als günstig erwiesen, dass wenigstens ein Lenker einer Klappmechanik zumindest bereichsweise rohrförmig gestaltet ist. Eine Rohrform, womit auch Hohlprofile mit eckigen Querschnitten gemeint sind, stellt einen optimalen Kompromiss aus höchstmöglicher Stabilität einerseits und aus geringem Gewicht andererseits dar. Darüber hinaus bietet ein Rohr die Möglichkeit einer leichten Fixierung mittels eines in den Hohlraum eingreifenden Arretierungsstiftes.

Als Material für die Parallellenker kommt vor allem ein Metallrohr in Betracht, bspw. Aluminium mit dem Vorteil eines besonderen Gewichts oder Edelstahl, welches eine besonders hohe Stabilität aufweist.

Andererseits können Teile des Fahrgestells, insbesondere Halterungselemente für je ein Lenkerpaar, aus Kunststoff gefertigt sein, insbesondere aus faserverstärktem Kunststoff gespritzt. Ggf. können die Lagerungspunkte durch eingesetzte, eingepreßte, eingeklebte oder eingespritzte Elemente aus einem harten bzw. verschleißarmen Werkstoff, bspw. Metallhülsen, verstärkt sein.

Weitere Vorteile ergeben sich dadurch, dass jeweils die beiden Lenker an der selben Seite des Kinderwagengestells an einem gemeinsamen Halterungselement des Fahrgestells angelenkt sind. Bei gebräuchlichen Fahrgestellen aus miteinander verbundenen Rohren sind im Bereich Anlenkung der Parallellenker spezielle Strukturen erforderlich, bspw. Laschen od. dgl. Diese müssen wiederum an dem Fahrgestell fixiert werden, bspw. durch Schweißen oder mit Klebstoff. Werden daher mehrere Anlenkpunkte an einer gemeinsamen Struktur angeordnet, so verringert sich der Herstellungsaufwand hinsichtlich dieser Verbindungen. Außerdem ist dadurch das Einhalten eines vorgegebenen Abstandes zwischen den betreffenden Anlenkpunkten nicht von einer Verbindungstechnik abhängig, sondern nur von der Formgebungstechnik der betreffenden Halterung, bspw. Bohren, Stanzen, etc. Derartige Techniken erlauben mit einem weitaus geringeren Aufwand die Einhaltung vorgegebener Maße. Damit wird die Klemmfreiheit der Mechanik sichergestellt.

Dieser Erfindungsgedanke läßt sich dahingehend weiterbilden, dass ein Halterungselement des Fahrgestells durch eine Lasche oder zwei, vorzugsweise zueinander parallelen Laschen gebildet ist, an der bzw. zwischen denen die betreffenden Lenker schwenkbar angelenkt sind. Bevorzugt ist die Grundebene dieser Lasche(n) von der Schwenkachse der betreffenden Lenker lotrecht durchsetzt. Zwei zueinander parallele Laschen können eine Schwenkachse zu beiden Seiten des betreffenden Lenkers abstützen, so dass dadurch ein Höchstmaß an Präzision und Stabilität erreicht wird.

Indem zwei, den selben Lenkern zugeordnete Halterungslaschen des Fahrgestells die Seitenwangen einer Gabel oder eines Profils mit U-förmigem Querschnitt bilden, ist eine stabile Flucht der beiden Lagerungspunkte für eine Lenker-Schwenkachse gewährleistet. Auch dieses Merkmal fördert daher die Verschleißfreiheit und Leichtgängigkeit der erfindungsgemäßen Klappmechanik.

Wie oben ausgeführt, können die erfindungsgemäßen Halterungselemente für die Lenker der Klappmechanik an dem Fahrgestell fixiert oder mit dem Fahrgestell integriert bzw. ein Bestandteil desselben sein, bspw dann, wenn das Fahrgestell Längsträger mit etwa rechteckigem Querschnitt aufweist, wo dann solchenfalls direkt die Anlenkpunkte für die erfindungsgemäßen Parallellenker angeordnet sein können, bspw. eingebohrt oder -gestanzt. In der Mehrzahl der Fälle müssen bspw. flächige, gabel- oder klammerförmige Halterungen an Tragelementen des Fahrgestells mit rundem Querschnitt fixiert werden. Dafür eignet sich vor allem eine Schweiß- oder Klebetechnik.

Die erfindungsgemäße Konstruktion läßt sich weiter dadurch optimieren, dass ein gabel- oder profilförmiges Halterungselement für ein Lenkerpaar der Klappmechanik gegenüber dem Fahrgestell bzw. gegenüber der gemeinsamen Aufstandsfläche in Fahrtrichtung geneigt ist, bspw. unter einem Winkel zwischen ± 20° und ± 45° gegenüber der Vertikalen. Solchenfalls bilden die in ihrer oberen Position arretierten Parallellenker die gerade bzw. knickfreie Verlängerung der Längsachse einer langgestreckten Halterung. Neben einer vorteilhaften Ästhetik resultiert daraus auch eine leicht berechen- und beherrschbare Statik.

Die Höhenverstellung des Aufbau-Trgrahmens gegenüber dem Fahrgestell resultiert daraus, dass in der ausgeklappten Position die Parallellenker mehr oder weniger stark nach oben ragen, in der zusammengefalteten Position dagegen nach unten. Sie müssen daher über die Horizontale hinweg schwenkbar sein. Dies läßt sich bei in einem geringen gegenseitigen Abstand - an einem gemeinsamen Halterungselement - angelenkten Lenkern nur dann erreichen, wenn die Anlenkpunkte der beiden Lenker eines Paares an der betreffenden Halterung mehr oder weniger vertikal übereinander liegen. Denn es ist zu bedenken, dass bei einer derartigen Anordnung die Verbindungslinie zwischen den beiden benachbarten Anlenkpunkten von dem Lenkergestänge nicht überschritten werden kann, weil sich die beiden Lenker vorzugsweise in der selben Ebene bewegen und solchenfalls an dieser Linie sich dann gegenseitig im Wege sind. Wenn diese Linie etwa vertikal verläuft, so kann das Hebel- bzw. Lenkergestänge von einer nahezu vertikal nach oben weisenden Position bis in eine nahezu vertikal herabhängende Position verschwenkt werden, und es ergibt sich bei minimaler Lenkerlänge eine maximale Höhenverstellbarkeit.

Die Erfindung zeichnet sich weiterhin dadurch aus, dass sich die Halterungselemente und/oder die unteren Anlenkpunkte der Parallellenker zwischen den V order- und den Hinterrädern bzw. zwischen Vorder- und Hinterachse befinden, so dass eine Schwenkbewegung weder durch eine Vordernoch durch eine Hinterachse des Fahrgestells beeinträchtigt wird. Etwa in der Mitte des Aufbau-Tragrahmens bzw. des Fahrgestells - jeweils in Längs- bzw. Fahrtrichtung gesehen - befindet sich außerdem der Schwerpunkt des betreffenden Kinderwagens, und dadurch können mit einfachsten Mitteln Verwindungen des Aufbau-Tragrahmens bzw. des Fahrgestells vermieden werden.

Die Erfindung bietet außerdem die Möglichkeit, einen der beiden Lenker eines Paares über seinen Anlenkpunkt an dem Aufbaurahmen hinaus zu verlängern. Damit wird eine Art Betätigungshebel geschaffen, der leicht bedient werden kann, um die erfindungsgemäße Klappmechanik von einer Position in die andere zu verbringen.

Um die Verwindungssteifigkeit der erfindungsgemäßen Klappmechanik zu erhöhen, können die über den Anlenkpunkt an dem Aufbaurahmen hinaus weisenden Verlängerungen je eines Lenkers miteinander verbunden sein, vorzugsweise an ihren peripheren Enden. Dadurch wird außerdem die simultane Betätigung der beiden Seiten der erfindungsgemäßen Klappmechanik erleichtert.

Wenn die miteinander verbundenen Verlängerungen der Klappmechanik als Schiebebügel ausgebildet sind, so können dieselben mehrere Funktionen übernehmen, wodurch sich ein erfindungsgemäßer Kinderwagen konstruktiv vereinfacht und außerdem Gewicht eingespart werden kann.

Der Schiebebügel kann durch Gelenk- und/oder Teleskopverbindungen in seiner Länge verstellbar sein, um den Kinderwagen insgesamt etwa auf das Format des Fahrgestells zusammenlegen zu können.

Ferner empfiehlt die Erfindung, dass der jenseits des Tragrahmens liegende, als Schiebebügel weitergebildete Bereich eines verlängerten Lenkers mit dessen Bereich zwischen dem Tragrahmen und dem Fahrgestell einen Winkel von mehr als 45°, vorzugsweise von mehr als 60°, insbesondere von etwa 90° oder mehr, einschließt. Dadurch weist der Schiebebügel bei der vollständig ausgeklappten Position des Tragrahmens vorzugsweise in eine Richtung entgegen der Richtung des unteren Lenkerabschnittes. Der überwiegende vertikale Schwenkwinkel des unteren Lenkerabschnittes beim Zusammenklappen wird daher in einen überwiegende horizontalen Schwenkwinkel des eigentlichen Schiebebügels transformiert. Dadurch ist es diesem möglich, beim Aus- und/oder Einklappen über den Tragrahmen hinwegzuschwenken, und zwar ebenfalls um einen entsprechend großen Gesamtschwenkwinkel wie das Parallelogrammgestänge. Dieser gegenüber herkömmlichen Schiebebügeln deutlich größere Winkel führt zu einer Reduzierung der Betätigungskraft beim Auf- bzw. Zusammenklappen des erfindungsgemäßen Kinderwagens.

Zwecks Arretierung der Klappmechanik in der angehobenen Position sollte im Bereich wenigstens eines Anlenkpunktes, vorzugsweise an dem Fahrgestell, eine Einrichtung zur Arretierung der Klappmechanik in der angehobenen Position vorgesehen sein. Diese läßt sich bspw. mit einem in den Bewegungsbereich wenigstens eines Lenkers eingreifenden bzw. hinein bewegbaren Element realisieren, das sodann eine Relativbewegung zwischen Klappmechanismus einerseits und Fahrgestell oder Aufbau-Tragrahmen andererseits unterbindet. Da die untere Position der Klappmechanik einerseits durch die Gravitationskraft ohnehin stabil ist und außerdem nur in unbenutztem Zustand des Kinderwagens eingenommen wird, ist nur die obere, an und für sich instabile Position der Klappmechanik zu stabilisieren bzw. zu arretieren. Bei einer Verbindung der beiden Seiten der Klappmechanik genügt somit theoretisch zwar eine einzige Arretierungseinrichtung. Um eine Verwindung des Kinderwagens zu verhindern, sollte jedoch an beiden Seiten des Kinderwagens je eine Arretierungseinrichtung vorgesehen sein.

Die Bewegungskurve eines beweglichen Arretierungselements kann einer Kreisbahn folgen, indem es wie ein Verriegelungshaken um eine Drehachse verschwenkt wird, oder einer etwa geraden Linie, indem das in den Bewegungsbereich eines Lenkers eingreifende Element aus diesem Bewegungsbereich zurückziehbar ist. Wichtig ist jedoch, dass sich die Bewegungskurve des Arretierungselements und die Bewegungskurve der Klappmechanik schneiden bzw. kreuzen.

Von großer Bedeutung für die Arretierungsmechanik ist weiterhin, dass das in den Bewegungsbereich eines Lenkers eingreifende Element unter der Wirkung einer Feder oder einer Verriegelungsmechanik in den Bewegungsbereich des Lenkers gedrückt oder gezogen wird. Die Position des beweglichen Arretierungselements sollte sich in von außen kräftefreiem Zustand auf der Bewegungskurve der Klappmechanik befinden, so dass letztere dauerhaft in dem arretierten Zustand verharrt. Erst durch manuelles, aktives Lösen der Arretierungsmechanik kann der Kinderwagen zusammengelegt werden.

Ein solches, manuelles Lösen der Arretierungsmechanik wird bewirkt mittels eines Betätigungselements, das mit dem beweglichen Arretierungselement verbunden oder gekoppelt ist, um dieses manuell aus diesem Bewegungsbereich der Klappmechanik heraus- bzw. zurückzuziehen.

Besondere Vorteile bietet eine Anordnung, wobei das in den Bewegungsbereich eines Lenkers eingreifende Element als zu einem rohrförmigem Lenker in dessen hochgeschwenkter Position koaxialer Bolzen ausgebildet ist. Wenn der Außenquerschnitt eines solchen Bolzens mit dem Innendurchmesser eines rohrförmigen Lenkers etwa korrespondiert, so kann ein solcher Bolzen neben der Arretierungsfunktion auch noch eine seitliche Führungs- bzw. Stabilisierungsfunktion übernehmen.

Dieser Arretierungsbolzen kann in seiner Längsrichtung verschiebbar geführt sein, vorzugsweise entgegen der Wirkung einer integrierten Feder. Bei einer entsprechenden Neigung bzw. Ausrichtung des Halterungsprofils in einer Flucht mit den hochgeschwenkten Parallellenkern läßt sich die Führung eines solchen Bolzens parallel zu der Längsachse des Halterungsprofils ausrichten. Im Bereich dieser Führung kann das den Bolzen nach oben bzw. außen gegen einen Lenker drückende Federelement untergebracht werden. Dieses Federelement kann bspw. als Spiralfeder ausgebildet sein, die eine rückseitige, koaxiale Verlängerung des Bolzens umgreift.

Die Erfindung erlaubt es, das Fahrgestell bzw. dessen Längsholme oder - verstrebungen durch die beiden seitlichen Halterungselemente für je ein Lenkerpaar in einen vorderen und einen hinteren Bereich zu unterteilen. Dadurch können der vordere und der rückwärtige Bereich des Fahrgestells unterschiedlich gestaltet sein, mit jeweils optimierten und ggf. voneinander abweichenden Eigenschaften.

Bspw. kann an den beiden seitlichen Halterungselementen für je ein Lenkerpaar je eine nach hinten ragende Schwinge vorgesehen sein, an deren freiem Ende wenigstens je ein Hinterrad gelagert ist. Eine solche Schwinge kann hinsichtlich ihrer Neigung gegenüber dem übrigen Fahrgestell veränderbar gestaltet sein, bspw. um die Neigung des Kindersitzes zu verändern.

Zusätzlich oder alternativ zu einer derartigen, manuellen Verstellbarkeit ist es auch möglich, dass zwei solche Schwingen gegenüber dem betreffenden Halterungselement abgefedert sind. Der Kinderwagen ist dadurch in der Lage, Bodenunebenheiten auszugleichen, so dass er auch abseits gepflasterter oder asphaltierter Wege eingesetzt werden kann. Zu diesem Zweck ist es von Vorteil, dass die beiden Schwingen nicht miteinander verbunden sind nach Art einer Einzelradaufhängung im Gegensatz zu einer bei herkömmlichen Kinderwagen häufig anzutreffenden Starrachse.

Demgegenüber läßt sich an den beiden seitlichen Halterungselementen für je ein Lenkerpaar jeweils eine nach vorne ragende Strebe anordnen. Diese können zwecks Versteifung miteinander verbunden sein, vorzugsweise in ihrem vorderen und/oder hinteren Bereich. Entsprechende Versteifungen können auch zwischen den beiden Halterungen direkt verlaufen. Diese Halterungen, Streben und Verbindungen bilden zusammen das eigentliche, in sich steife Fahrgestell.

Vorzugsweise sind die beiden, nach vorne ragenden Streben als Hohlprofile ausgebildet. Dadurch wird bei maximaler Stabilität das Gewicht reduziert.

Dem Zweck des Fahrgestells entsprechend ist im Bereich der freien Enden der nach vorne ragenden Streben je ein Vorderrad gelagert. Wie dies bei manchen Sportwagen oder Buggies üblich ist, können dort natürlich auch jeweils zwei zueinander parallele Räder vorgesehen sein. Die Vorderräder können lenkbar sein, so dass die Steuerung eines solchen Kinderwagens erleichtert ist.

Schließlich entspricht es der Lehre der Erfindung, dass die beiden Vorderräder an je einem von der betreffenden, nach vorne ragenden Strebe lösbaren Endstück angeordnet sind. Dadurch können bspw. nicht lenkbare Räder durch lenkbare ausgetauscht werden.

Weitere Merkmale, Eigenschaften, Vorteile und Wirkungen auf der Basis der Erfindung ergeben sich aus der nachfolgenden Beschreibung einer bevorzugten Ausführungsform der Erfindung sowie anhand der Zeichnung. Hierbei zeigen:
- Fig. 1: eine Seitenansicht eines erfindungsgemäßen Kinderwagengestells, wobei der Aufsatz angedeutet ist;
- Fig. 2: das auseinandergeklappte Kinderwagengestell aus Fig. 1 in einer perspektivischen Darstellung;
- Fig. 3: das Kinderwagengestell aus Fig. 1 in zusammengelegtem Zustand, ebenfalls in einer perspektivischen Darstellung;
- Fig. 4: eine Seitenansicht auf den Klappmechanismus des zusammengelegten Kinderwagengestells aus Fig. 3;
- Fig. 5: eine perspektivische Darstellung eines Kinderwagengestells gemäß einer weiteren Ausführungsform der Erfindung, in aufgeklapptem Zustand;
- Fig. 6: das Kinderwagengestell aus Fig. 5 in zusammengelegtem Zustand;
- Fig. 7: eine Seitenansicht auf das Kinderwagengestell einer wiederum abgewandelten Ausführungsform der Erfindung;
- Fig. 8: eine Modifikation des Kinderwagengestells aus Fig. 7; sowie
- Fig. 9: ein Detail des Kinderwagengestells aus Fig. 7 in einer perspektivischen Darstellung.

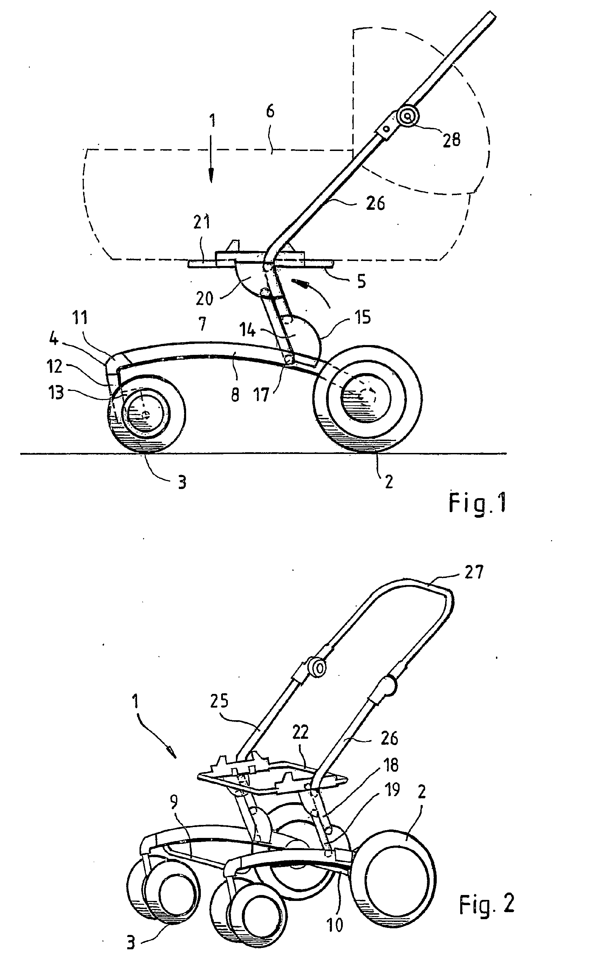

In den Fig. 1 und 2 ist ein erfindungsgemäßes Gestell 1 für einen Kinderwagen abgebildet, wobei es sich in diesem Fall um einen lenkbaren Wagen handelt nach Art eines Sportwagens oder Buggys, mit zwei fest ausgerichteten Hinterrädern 2 und lenkbaren Vorderrädern 3. Die Art des Kinderwagens (Wagen für Kleinkinder, Zwillinge, Sportwagen, Buggy, etc.) hat ebensowenig Einfluß auf die Erfindung wie die Anzahl der Räder; es können vier, sechs oder acht Räder vorhanden sein, ggf. aber auch nur drei.

Das Gestell 1 unterteilt sich in drei Abschnitte: Das eigentliche Fahrgestell 4, welches die Räder 2, 3 trägt; einen Rahmen 5 zur Abstützung des (ggf. variablen) Aufbaus 6; sowie eine Fahrgestell 4 und Stützrahmen 5 verbindende Klappmechanik 7.

Das Fahrgestell 4 umfaßt zwei in diesem Fall geschwungene Längsholme 8, die in ihrem vorderen und hinteren Bereich durch je eine Querstrebe 9 starr miteinander verbunden sind. Am hinteren Ende der Längsholme 8 sitzen die Lager für die Hinterräder 2. Am seinem vorderen Ende ist jeder Längsholm 8 durch je ein Kniestück 11 etwa vertikal nach unten abgebogen 12. Um diese etwa vertikalen Abschnitte 12 ist ein Achslager-Bauteil 13 verschwenkbar gelagert. In jedem solchermaßen lenkbaren Achslager 13 ist eine Achse mit zwei Vorderräder aufgenommen.

An den beiden Längsholmen 8 des Fahrgestells 4 ist die Klappmechanik 7 angeschlossen. Zu diesem Zweck ist an jedem Längsholm 8 eine Halterungsplatte 14 nach oben ragend befestigt, insbesondere angeschweißt. Jede Halterungsplatte 14 kann im Bereich ihrer Unterkante zwei, den betreffenden Längsholm 8 an dessen beiden Seiten umgreifende Laschen aufweisen, um dadurch bereits einen Formschluß auszubilden. Vorzugsweise befindet sich die Plattenebene jeweils an der Innenseite des betreffenden Längsholms 8. Beide Halterungsplatten 14 sind symmetrisch zur Mittelebene des Fahrgestells 4 angeordnet und parallel zu dem betreffenden Längsholm 8 wie auch parallel zueinander ausgerichtet. Die beiden Halterungsplatten 14 haben jeweils eine etwa kreissegmentförmige Grundfläche mit zwei geraden Berandungslinien, die etwa einen Winkel von 90° bis 150°, insbesondere etwa 120°, miteinander einschließen, und mit einer gebogenen, insbesondere etwa entlang einer Kreislinie um den Schnittpunkt der anderen beiden Linien, folgenden Randlinie 15. Dieser Randverlauf ist allerdings nicht zwingend.

Diese Halterungsplatten 14 sind gegenüber der quer zur Fahrtrichtung verlaufenden Mittelebene zwischen Vorder- und Hinterrädern 3,2 nach hinten verschoben an den Längsholmen 8 befestigt. Da an dieser Stelle die Längsholme 8 aufgrund Ihrer Durchbiegung zu den Hinterrädern 2 hin abfallen, bspw. um 20° bis 40°, ist die in Fahrtrichtung vorne befindliche, gerade Kante 16 jeder Halterungsplatte 14 etwa vertikal orientiert. Im Bereich dieser etwa vertikal verlaufenden Vorderkante 16 ist jede Halterungsplatte 16 mit je zwei Durchgangsbohrungen 17 versehen, die etwa vertikal übereinander liegen, bspw. in einem Abstand von 5 bis 15 cm, insbesondere etwa 10 cm, und etwas hinter der quer verlaufenden Mittelebene des Gestells 1, bspw. um 5 bis 20 cm nach hinten versetzt. Durch jede dieser Bohrungen 17 ist je ein Nietstift, Bolzen od. dgl. gesteckt, der als Schwenkachse für je eine Lenkerstange 18, 19 dient.

Diese stangenförmigen Lenker 18, 19 sind andererseits an weiteren Halterungen 20 des Aufbau-Stützrahmens 5 angelenkt.

Der Stützrahmen 5 für den Kinderwagenaufbau 6 hat eine etwa rechteckige Gestalt mit zwei Längsstreben 21 und zwei Querstreben 22. Daran können Verschlüsse od. dgl. zur Fixierung des Aufbaus 6 befestigt sein. An den beiden Längsstreben 21 ist je eine Halterung 20 befestigt. Die beiden Halterungen 20 können ähnlich oder identisch geformt sein zu den Halterungsplatten 14, nur sind sie gegenüber den unteren Halterungen um etwa 180° verdreht. Sie weisen also nach unten, und die bogenförmige Kante 23 liegt vorne, die gerade hinten. Auch diese Halterungsplatten 20 sind mit je zwei Durchgangs-Bohrungen 24 versehen, deren Abstand exakt dem Abstand zwischen den beiden Durchgangsbohrungen 17 in einer unteren Halterungsplatte 14 entspricht. Die Verbindungslinie zwischen den Mittelpunkten der Bohrungen 24 derselben Halterungsplatte 20 ist etwa lotrecht zu der Ebene des Stützrahmens 5 orientiert. Jede Bohrung ist von einer Achse durchgriffen, an der je einer der Lenker 18, 19 verschwenkbar gelagert ist. Somit bilden die beiden oberen Lenker 18, welche jeweils die oberen Bohrungen 17, 24 bzw. die dort aufgenommenen Achsen miteinander verbinden, und die beiden unteren Lenker 19, die den jeweils unteren Bohrungen 17, 24 bzw. den dortigen Achsen zugeordnet sind, ein Parallellenkergestänge, das zur Folge hat, dass bei einem Verschwenken der Lenker 18, 19 die Ebene des Stützrahmens 5 und damit auch der darauf ggf. befestigte Aufbau 6 stets horizontal ausgerichtet bleibt.

Während die Halterungen 14 an den Innenseiten des Fahrgestells 4 angeordnet sind, befinden sich die Halterungen 20 an den Außenseiten des Stützrahmens 5. Die Breite des Stützrahmens 5 ist daher schmäler als die Breite des Fahrgestells 4. Da auch die in Fahrtrichtung gemessene Länge des Stützrahmens 5 kürzer ist als der Abstand zwischen den Querstreben 9, 10 des Fahrgestells, kann der Stützrahmen 5 beim Herabschwenken in das Fahrgestell 4 eintauchen, so dass das Gestell 1 sich auf eine besonders niedrige Höhe zusammenlegen läßt. Maßgebenden Anteil hieran trägt auch die Tatsache, dass die Halterungsplatten 14 an dem Fahrgestell 4 nach hinten verschoben sind, während die Halterungsplatten 20 derart an dem Stützrahmen 5 befestigt sind, dass sich die dortigen Bohrungen 24 in Fahrtrichtung gesehen etwa in der Mitte des Stützrahmens 5 befinden und dieser daher etwa frei von Kippmomenten zu beiden Seiten seines Schwerpunktes abgestützt wird. Denn dadurch sich kann der Stützrahmen 5 beim Zusammenlegen auf einer sich nach vorne ausbauchenden Kreisbahn nach unten bewegen.

Da sich die Lenker 18, 19 an einer Seite des Gestells 1 in einer gemeinsamen Ebene befinden, können sie weder vollständig in die Vertikale nach oben geschwenkt werden noch vollständig nach unten. Sie müssen daher zumindest in der hochgeschwenkten Position, in der das Gestell 1 samt Kinderwagen verwendet wird, arretiert werden. Dies leistet bspw. ein Stift oder Haken, der an einer Halterungsplatte 14, 20 gelagert ist und wahlweise in die Bewegungskurve der Lenker 18, 19 hineinragt oder daraus heraus bewegt werden kann und sich zumindest in der eingreifenden Position arretieren läßt.

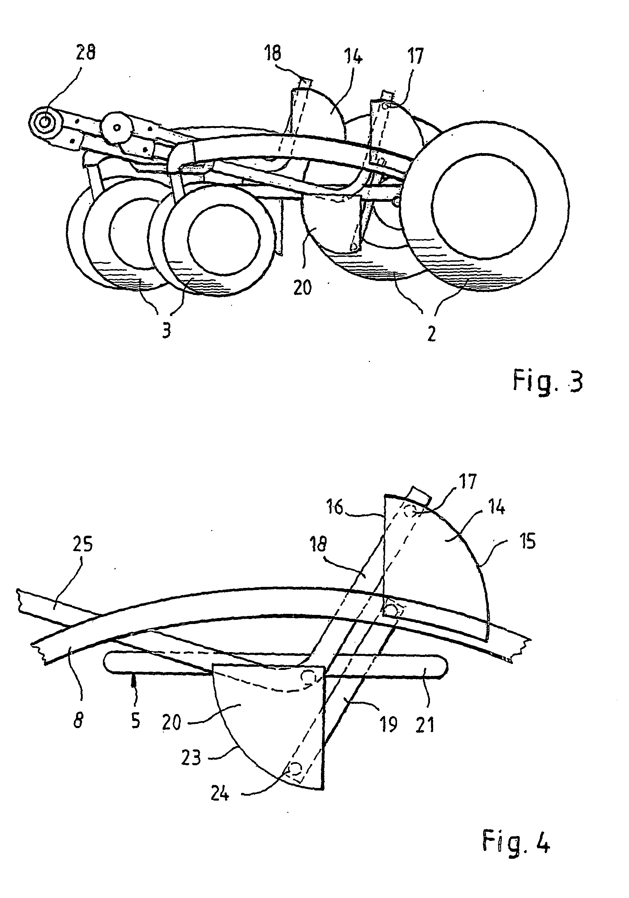

Während ein Lenker 19 an jeder Seite des Gestells 1, vorzugsweise der jeweils untere, etwa im Bereich seiner beiden Anlenkpunkte 17, 24 endet, ist der jeweils andere Lenker 18, vorzugsweise der jeweils obere, über seinen oberen Anlenkpunkt 24 hinaus verlängert 25. Diese Verlängerungen 25 sind zu einem Schiebebügel 26 weitergebildet und zu diesem Zweck im Bereich ihrer freien Enden miteinander verbunden 27. Je ein Gelenk 28 etwa in der Mitte der beiden Verlängerungen 25 erlaubt ein sehr kleines, platzsparendes Zusammenlegen des Gestells 1, wie die Fig. 3 erkennen läßt. Im zusammengelegten Zustand ist die Gesamtlänge kaum länger als das Fahrgestell 4, und die maximale Höhe kaum größer als der Durchmesser eines Hinterrades 2. Vorzugsweise schließt der Lenker 18 mit seiner Verlängerung 26 einen Winkel ein, vorzugsweise einen stumpfen Winkel zwischen 120° und 170°.

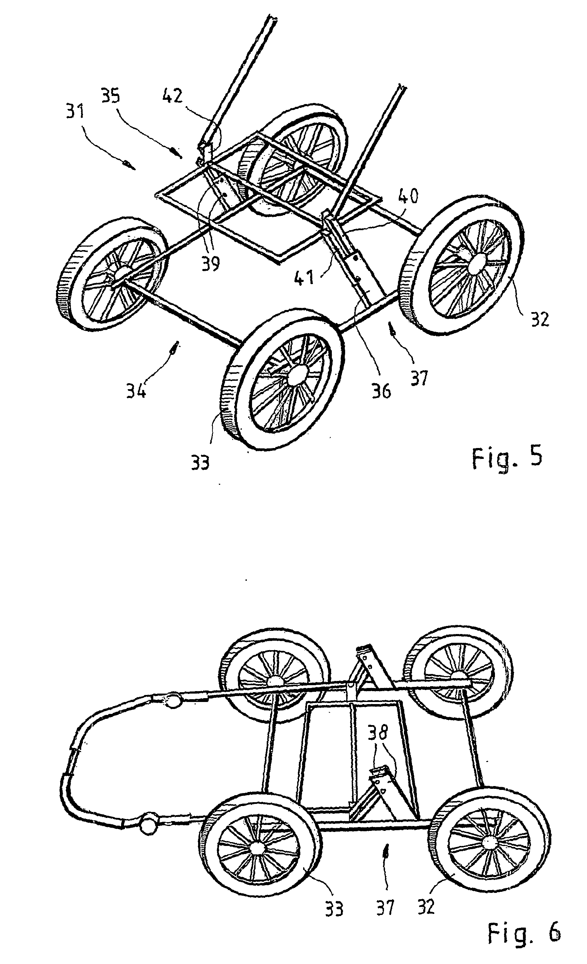

Die weitere, in den Fig. 5 und 6 dargestellte Ausführungsform eines Gestells 31 entspricht hinsichtlich Rädern 32, 33, Fahrgestell 34 und Stützrahmen 35 für den Aufbau grundsätzlich der ersten Ausführungsform 1. Im Gegensatz zu dieser sind die jeweils unteren Halterungen 36 an dem Fahrgestell 34 bei dieser Klappmechanik 37 nicht als Platten ausgebildet, sondern als Profile mit einem etwa U-förmigen Querschnitt. Die Längsachsen dieser Profile 36 sind geringfügig gegenüber der Vertikalen geneigt, bspw. um 10° bis 30°. Die Festlegung dieser Profile 36 an dem Fahrgestell 34 erfolgt ebenfalls außermittig, bspw. nach hinten verschoben. Dadurch und infolge ihrer zu der Gestellmitte hin konvergierenden Neigung befinden sich die oberen Enden dieser Profile 36 etwa auf oder nahe der Mitte zwischen je einem Vorder- und Hinterrad 33, 32. Dort, nämlich im Bereich ihrer oberen Enden, sind die beiden zueinander parallelen Schenkel 38 der Profile 36 mit je zwei Bohrungen 39 versehen, von denen jeweils zwei miteinander fluchten, so dass sie von einer gemeinsamen Achse durchgriffen werden können.

An jeder dieser Achsen ist ein Lenker 40, 41 gelagert. Die U-Profile 36 erhöhen einerseits die Seitenstabilität des Gestells 1. Andererseits sind sie derart geneigt, dass die Lenker 40, 41 in ihrer hochgeschwenkten Position mit der Längsachse der U-Profile fluchten bzw. parallel dazu verlaufen. Es ist daher möglich, in dem Hohlraum zwischen den beiden Schenkeln 38 einen zu der Profilachse parallelen Stift od. dgl. anzuordnen und in der Längsrichtung des U-Profils 36 verschiebbar zu führen.

Wenn - wie die Erfindung weiterhin vorsieht - die Lenker 40, 41 als Hohlprofile, bspw. als Vierkantprofile oder Rohre, ausgebildet sind, so kann ein solcher Stift in ein solches Hohlprofil oder Rohr eingreifen und dadurch eine weitere Verschwenkung desselben unterbinden. Hierzu ist es allerdings wichtig, den betreffenden Lenker über seinen unteren Anlenkpunkt 39 hinaus zu verlängern, um dort eine Eingriffsmöglichkeit für den Arretierungsstift od. dgl. zu schaffen. Ein solcher Arretierungsstift kann bspw. mittels einer Druckfeder in seine angehobene Eingriffsposition gedrückt werden und muß manuell betätigt, d.h., herabgedrückt werden, um das Gestell 31 zusammenzuklappen. Ein weiterer Vorteil einer derartigen Arretierungstechnik ist, dass zusätzlich die Seitenstabilität des Gestells 31 erhöht wird.

Als weitere Besonderheit erstrecken sich bei dieser Ausführungsform 31 die oberen Halteplatten 42 von dem Stützrahmen 35 nach oben.

Die Ausführungsform 51 aus den Fig. 5 bis 9 ist durch Weiterbildung der Ausführungsform 31 entstanden. Die gravierendsten Unterschiede zeigen sich an dem die Räder 52, 53 tragenden Fahrgestell 54, während der Stützrahmen 55 für den Aufbau, Schiebebügel 56 und Klappmechanik 57 weitgehend den betreffenden Elementen der Ausführungsform 31 entsprechen.

Die Längsholme 58 des Fahrgestells 54 sind unterteilt in je einen vorderen Abschnitt 59 und einen rückwärtigen Abschnitt 60. Diese beiden Abschnitte 59, 60 sind nicht direkt miteinander verbunden, sondern jeweils an ein Halterungsteil 61 angeschlossen, das von seinem Aufbau und seiner Funktion her ähnlich ist zu dem entsprechenden Halterungsteil 36 der Ausführungsform 31. Es kann bei dieser Ausführungsform jedoch als Spritzgußteil ausgeführt sein, bspw. aus Kunststoff oder aus Metall, insbesondere aus Aluminium. Daher ist es möglich, eine relativ komplizierte Geometrie zu wählen, bspw. mit einem unteren, etwa vierkantförmigen Querschnitt 62, einem daran anschließenden Bereich mit U-Querschnitt 63, und einem oberen, etwa gabelförmigen Bereich 64, wo sich etwa auch die Anlenkpunkte 65 für die Lenker 66, 67 befinden. In eine nach vorne offenen Aufnahme eines Ansatzes 74 an der Halterung 61 ist je ein nach vorne ragender Holmabschnitt 59 eingesteckt.

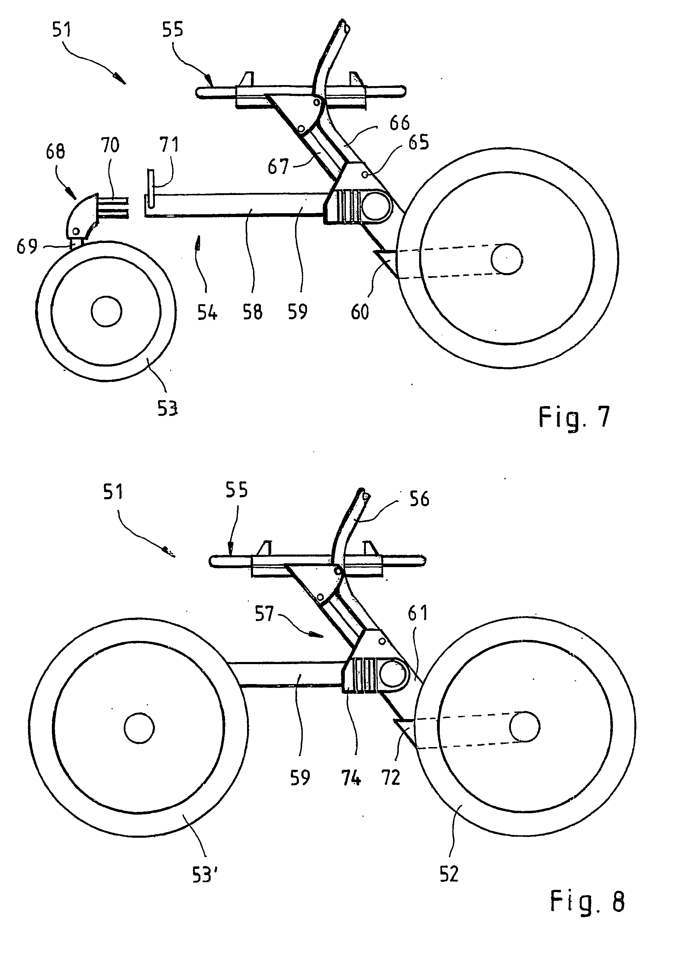

Dieser Homabschnitt 59 kann hohl ausgebildet und/oder an seinem vorderen Ende mit einer Anbau-, insbesondere Einsteckmöglichkeit, für das eigentliche, je ein oder zwei Vorderräder 53 tragende Lagerungsteil 68 versehen sein. Wie Fig. 7 zeigt, kann dieses Lagerungsteil 68 im Falle lenkbarer Vorderräder 53 als Kniestück mit nach unten ragender Schwenkachse 69 ausgebildet sein, um welche die eigentliche Achslagerung der Vorderräder 53 verschwenkbar ist. Zum Einstecken in den Holmabschnitt 59 sind an dem Lagerungsteil 68 nach rückwärts gerichtete Einsteckfortsätze 70 vorgesehen, deren Arretierung innerhalb des Holmabschnitts 59 bspw. mittels eines Klemmelements 71 erfolgen kann. Vorzugsweise sind die Holmabschnitte 59 im Bereich ihrer vorderen Enden und im Bereich der Halterungsteile 61 durch Querstreben miteinander verbunden. Dieses Prinzip erlaubt es, die Vorderräder 53 zu demontieren und durch andere, bspw. nicht lenkbare Vorderräder 53' auszutauschen bzw. umgekehrt.

Am unteren Ende eines Halterungsteils 61 schließt sich je eine Schwinge 72 an, die etwa horizontal nach hinten weist, und deren Länge etwas größer ist als der Radius eines Hinterrades 52. Am freien Ende der Schwingen 72 befindet sich die Lagerung für das betreffende Hinterrad 52. Diese Schwingen 72 sind abgefedert, d.h., sie können in begrenztem Umfang eine Schwenkbewegung nach oben um eine quer zur Fahrtrichtung verlaufende Achse ausführen, werden aber durch die Kraft einer vorzugsweise in dem Halterungsteil 61 und/oder in der Schwinge 72 angeordneten Feder in eine untere Position gedrückt. Dadurch ist ein Ausgleich von Bodenunebenheiten möglich.

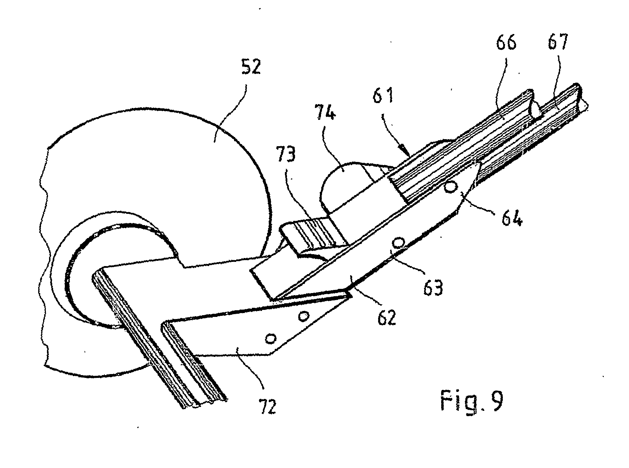

In Fig. 9 erkennt man außerdem ein nach Art eines (kleinen) Fußpedals gestaltetes Element 73 zur lösenden Betätigung eines in dem Halterungsteil 61 integrierten Arretierungsstiftes, der durch eine Feder nach oben in die stirnseitige Ausnehmung eines rohrförmigen Lenkers 66 gedrückt wird. Mit dem Fußpedal 73 wird dieser Stift entlang einer Führung und entgegen der Feder vorübergehend nach unten und damit aus dem Ende des Lenkers 66 herausbewegt.

## Patentansprüche

1. Zusammenklappbares Gestell (1;31;51) für einen Kinderwagen, mit einem mehrere Räder (2,3;32,33;52,53,53') aufweisenden Fahrgestell (4;34;54), einem den Aufbau (6), insbesondere einen Sitz, Schale, Tasche od. dgl. für ein Kind, tragenden Rahmen (5;35;55), sowie einer dazwischen angeordneten Klappmechanik (7;37;57), um den Abstand des Tragrahmens (5;35;55) für den Aufbau (6) von dem Fahrgestell (4;34;54) verändern zu können, wobei die Klappmechanik (7;37;57) wenigstens zwei zueinander parallele Lenker (18,19;40,41;66,67) aufweist, die nach Art eines etwa ebenen Parallellogrammgestänges an dem Fahrgestell (4;34;54) einerseits und an dem Tragrahmen (5;35;55) andererseits jeweils um Achsen verschwenkbar angelenkt sind, welche die Ebene des Parallelogrammgestänges etwa lotrecht durchsetzen, **dadurch gekennzeichnet, dass** die einander entsprechenden, d.h., die jeweils oberen bzw. die jeweils unteren Anlenkpunkte (17,24;39;65) der etwa in einer gemeinsamen Ebene liegenden Lenker (18,19;40,41;66,67) in vertikaler Richtung stärker gegeneinander versetzt sind als in horizontaler Richtung, so dass die Verbindungslinie zwischen diesen Anlenkpunkten (17,24;39;65) relativ steil verläuft oder im Grenzfall vertikal.

2. Kinderwagengestell nach Anspruch 1, **dadurch gekennzeichnet, dass** die horizontalen Außenabmessungen (Länge, Breite) des Tragrahmens (5;35;55) kleiner sind als die entsprechenden Innenabmessungen einer Ausnehmung in der Oberseite des Fahrgestells (4;34;54), so dass der Tragrahmen (5;35;55) beim Zusammenklappen des Kinderwagengestells (1;31;51) in das Fahrgestell (4;34;54) eintauchen kann/könnte.

3. Kinderwagengestell nach Anspruch 1 oder 2, **dadurch gekennzeichnet, dass** sich der Tragrahmen (5;35;55) zwischen den Lenkern (18,19;40,41;66,67) befindet.

4. Kinderwagengestell nach einem der Ansprüche 1 bis 3, **dadurch gekennzeichnet, dass** der parallel zu einer Radachse gemessene Abstand zwischen zwei Lenkern (18,19;40,41;66,67) an gegenüberliegenden Seiten des Kinderwagengestells (1;31;51) kleiner ist als der entsprechend gemessene Abstand zwischen zwei etwa in Fahrtrichtung verlaufenden, seitlichen Verstrebungen des Fahrgestells (4;34;54).

5. Kinderwagengestell nach einem der vorhergehenden Ansprüche, **dadurch gekennzeichnet, dass** ein Lenker (18,19;40,41;66,67) derart angelenkt ist, dass er zwischen ein- und ausgeklapptem Zustand des Kinderwagengestells (1;31;51) einen Schwenkwinkel von mehr als 120°, vorzugsweise von mehr als 135°, insbesondere von mehr als 150°, überstreicht.

6. Kinderwagengestell nach einem der vorhergehenden Ansprüche, **dadurch gekennzeichnet, dass** die Klappmechanik (7;37;57) derart ausgebildet ist, dass die nicht an dem Fahrgestell (4;34;54) angelenkten Enden der Lenker (18,19;40,41;66,67) sich in ausgeklapptem Zustand des Kinderwagengestells (1;31;51) oberhalb ihrer Anlenkpunkte (39;65) an dem Fahrgestell (4;34;54) befinden, in eingeklapptem Zustand dagegen unterhalb dieser Anlenkpunkte (39;65).

7. Kinderwagengestell nach einem der vorhergehenden Ansprüche, **dadurch gekennzeichnet, dass** jeweils die beiden Lenker (18,19;40,41;66,67) an der selben Seite des Kinderwagengestells (1;31;51) an einem gemeinsamen Halterungselement (14;36;61) des Fahrgestells (4;34;54) angelenkt sind.

8. Kinderwagengestell nach Anspruch 7, **dadurch gekennzeichnet, dass** ein Halterungselement (14;36;61) des Fahrgestells (4;34;54) durch eine Lasche (14) oder zwei, vorzugsweise zueinander parallele Laschen (38) gebildet ist, an der bzw. zwischen denen die betreffenden Lenker (18,19;40,41;66,67) schwenkbar angelenkt sind.

9. Kinderwagengestell nach Anspruch 8, **dadurch gekennzeichnet, dass** zwei, den selben Lenkern (18,19;40,41;66,67) zugeordnete Halterungslaschen (14;36;61) des Fahrgestells (4;34;54) die Seitenwangen einer Gabel oder eines Profils mit U-förmigem Querschnitt bilden.

10. Kinderwagengestell nach einem der Ansprüche 7 bis 9, **dadurch gekennzeichnet, dass** die Anlenkpunkte (17,24;39;65) der beiden Lenker (18,19;40,41;66,67) eines Paares an dem betreffenden Halterungselement (14;36;61) etwa vertikal übereinander liegen.

11. Kinderwagengestell nach einem der vorhergehenden Ansprüche, **dadurch gekennzeichnet, dass** sich die Halterungselemente (14;36;61) und/oder die unteren Anlenkpunkte (17;39;65) der Parallellenker (18,19;40,41;66,67) zwischen den Vorder- und den Hinterrädern (3,2;33,32;53,53',52) bzw. zwischen Vorder- und Hinterachse befinden, so dass eine Schwenkbewegung weder durch eine Vorder- noch durch eine Hinterachse des Fahrgestells (4;34;54) beeinträchtigt wird.

12. Kinderwagengestell nach einem der Ansprüche 7 bis 11, **dadurch gekennzeichnet, dass** das Fahrgestell (4;34;54) bzw. dessen Längsholme (8;58) durch die beiden seitlichen Halterungselemente (14;36;61) für je ein Lenkerpaar (18,19;40,41;66,67) und/oder die unteren Anlenkpunkte (17;39;65) der Parallellenker (18,19;40,41;66,67) in einen vorderen (59) und einen hinteren Bereich (60) unterteilt ist.

13. Kinderwagengestell nach Anspruch 11 oder 12, **dadurch gekennzeichnet, dass** hinter den beiden seitlichen Halterungselementen (14;36;61) für je ein Lenkerpaar (18,19;40,41;66,67) und/oder hinter den unteren Anlenkpunkten (17;39;65) der Parallellenker (18,19;40,41;66,67) je eine nach hinten ragende Schwinge (72) vorgesehen ist, an deren freiem Ende je ein Hinterrad (2;32;52) gelagert ist.

14. Kinderwagengestell nach Anspruch 13, **dadurch gekennzeichnet, dass** die beiden Schwingen (72) gegenüber dem betreffenden Halterungselement (14;36;61) abgefedert sind.

15. Kinderwagengestell nach einem der Ansprüche 11 bis 14, **dadurch gekennzeichnet, dass** vor den beiden seitlichen Halterungselementen (14;36;61) für je ein Lenkerpaar (18,19;40,41;66,67) und/oder vor den unteren Anlenkpunkten (17;39;65) der Parallellenker (18,19;40,41;66,67) je eine nach vorne ragende Strebe (59) vorgesehen ist, im Bereich von deren freiem Ende wenigstens je ein Vorderrad (3;33;53,53') gelagert ist.

16. Kinderwagengestell nach einem der vorhergehenden Ansprüche, **dadurch gekennzeichnet, dass** im Bereich eines Anlenkpunktes (17,24;39;65), vorzugsweise an dem Fahrgestell (4;34;54), eine Einrichtung zur Arretierung der Klappmechanik (7;37;57) in der angehobenen Position vorgesehen ist.

17. Kinderwagengestell nach Anspruch 16, **dadurch gekennzeichnet, dass** die Arretierungseinrichtung wenigstens ein in den Bewegungsbereich wenigstens eines Lenkers (18,19;40,41;66,67) eingreifendes Element aufweist.

18. Kinderwagengestell nach Anspruch 17, **dadurch gekennzeichnet, dass** das in den Bewegungsbereich eines Lenkers (18,19;40,41;66,67) eingreifende Element aus diesem Bewegungsbereich zurückziehbar ist.

19. Kinderwagengestell nach Anspruch 17 oder 18, **dadurch gekennzeichnet, dass** das in den Bewegungsbereich eines Lenkers (18,19;40,41;66,67) eingreifende Element unter der Wirkung einer Feder oder einer Verriegelungsmechanik in den Bewegungsbereich des Lenkers (18,19;40,41;66,67) gedrückt oder gezogen wird.

20. Kinderwagengestell nach einem der Ansprüche 17 bis 19, **dadurch gekennzeichnet, dass** das in den Bewegungsbereich eines Lenkers (18,19;40,41;66,67) eingreifende Element über ein Betätigungselement (73) manuell aus diesem Bewegungsbereich zurückziehbar ist.

21. Kinderwagengestell nach einem der Ansprüche 17 bis 20, **dadurch gekennzeichnet, dass** das in den Bewegungsbereich eines Lenkers (18,19;40,41;66,67) eingreifende Element als zu einem rohrförmigem Lenker (18,19;40,41;66,67) in dessen hochgeschwenkter Position koaxialer Bolzen ausgebildet ist.

22. Kinderwagengestell nach einem der vorhergehenden Ansprüche, **dadurch gekennzeichnet, dass** einer der beiden Lenker (18,19;40,41 ;66,67) eines Paares über seinen Anlenkpunkt (24) an dem Aufbaurahmen (5;35;55) hinaus verlängert ist (25).

23. Kinderwagengestell nach Anspruch 22, **dadurch gekennzeichnet, dass** die Verlängerungen (25) zweier Lenker als Schiebebügel (26) ausgebildet sind.

24. Kinderwagengestell nach Anspruch 23, **dadurch gekennzeichnet, dass** der Schiebebügel durch Gelenk- und/oder Teleskopverbindungen in seiner Länge verstellbar ist.

25. Kinderwagengestell nach Anspruch 23 oder 24, **dadurch gekennzeichnet, dass** der jenseits des Tragrahmens (5;35;55) liegende, als Schiebebügel (26) weitergebildete Bereich (25) eines verlängerten Lenkers (18,19;40,41;66,67) mit dessen Bereich zwischen dem Tragrahmen (5;35;55) und dem Fahrgestell (4;34;54) einen Winkel von mehr als 45°, vorzugsweise von mehr als 60°, insbesondere von mehr als 90°, einschließt.

26. Kinderwagengestell nach einem der Ansprüche 23 bis 25, **dadurch gekennzeichnet, dass** die Klappmechanik (7;37;57) derart ausgebildet ist, dass der Schiebebügel (26) beim Aus- und/oder Einklappen über den Tragrahmen (5;35;55) hinwegschwenkt.

## Claims

1. A collapsible chassis (1; 31; 51) for a child carriage, comprising a chassis (4; 34; 54) with a plurality of wheels (2, 3; 32; 33; 52; 53; 53'), a chassis (5; 35; 55) supporting the superstructure (6), particularly a seat, shell, pouch or the like for a child, and, disposed therebetween, a folding mechanism (7; 37; 57) operative to vary the distance of said support chassis (5; 35; 55) for said superstructure (6) from said chassis (4; 34; 54), wherein said folding mechanism (7; 37; 57) com0prises at least two mutually parallel links (18, 19; 40, 41; 66; 67) articulated in the manner of an approximately flat parallelogram linkage to said chassis (4; 34; 54), on the one hand, and to said support chassis (5; 35; 55), on the other, such as to be pivotable about respective axes that pass approximately perpendicularly through the plane of said parallelogram linkage, **characterised in that** the mutually corresponding, i. e. the upper respectively the lower articulation points (17,24;39;65) of the links (18,19;40,41;66,67) located approximately in a common plane are offset from each other to a greater extent in the vertical direction than in the horizontal direction, such that the connecting line between these articulation points (17,24;39;65) is relatively steep or vertical in the limit.

2. Child carriage chassis according to claim 1, **characterised in that** the horizontal outer dimensions (length, width) of said support chassis (5; 35; 55) are smaller than the corresponding inner dimensions of a clearance in the upper side of said chassis (4; 34; 54), such that said support chassis (5; 35; 55) can/could sink into said chassis (4; 34; 54) when said child carriage chassis (1; 31; 51) is collapsed.

3. Child carriage chassis according to claim 1 or 2, **characterised in that** said support chassis (5; 35; 55) is disposed between said links (18, 19; 40, 41; 66, 67).

4. Child carriage chassis according to one of claims 1 to 3, **characterised in that** the distance, measured parallel to a wheel axle, between two links (18, 19; 40, 41; 66, 67) on opposite sides of said child carriage chassis (1; 31; 51) is smaller than the correspondingly measured distance between two lateral struts of the chassis (4; 34; 54) that extend approximately in the direction of travel.

5. Child carriage chassis according to one of the preceding claims, **characterised in that** a link (18, 19; 40, 41; 66, 67) is articulated such that it traverses a pivot angle of more than 120°, preferably of more than 135°, particularly of more than 150°, between a collapsed and an erected state of said child carriage chassis (1; 31; 51).

6. Child carriage chassis according to one of the preceding claims, **characterised in that** said folding mechanism (7; 37; 57) is configured such that in the erected state of said child carriage chassis (1; 31; 51), the ends of said links (18, 19; 40, 41; 66, 67) which are not articulated to said chassis (4; 34; 549 are disposed above their articulation points (39; 65) to said chassis (4; 34; 54), whereas in the collapsed state they are below said articulation points (39; 65).

7. Child carriage chassis according to one of preceding claims, **characterised in that** the two links (18, 19; 40, 41; 66, 67) on the same respective side of said child carriage chassis (1; 31; 51) are articulated to a common mounting element (14; 36; 61) of said chassis (4; 34; 54).

8. Child carriage chassis according to claim 7, **characterised in that** a mounting element (14; 36; 61) of said chassis (4; 34; 54) is formed by a bracket (14) or by two preferably mutually parallel brackets (36), to which or between which the respective said links (18, 19; 40, 41; 66, 67) are pivotably articulated.

9. Child carriage chassis according to claim 8, **characterised in that** two mounting brackets (14; 36; 61) of said chassis (4; 34; 54), which are assigned to the same said links (18, 19; 40, 41; 66, 67), form the side legs of a fork or a profile section of U-shaped cross section.

10. Child carriage chassis according to one To claims 7 to 9, **characterised in that** said points of articulation (17, 24; 39; 65) of the two said links (18, 19; 40, 41; 66, 67) of a pair to the respective said mounting element (14; 36; 61) are disposed approximately vertically one above the other.

11. Child carriage chassis according to one of the preceding claims, **characterised in that** said mounting elements (14; 36; 61) and/or said lower articulation points (17; 39; 65) of said parallel links (18, 19; 40, 41; 66, 67) are disposed between the front and rear wheels (3, 2; 33, 32; 53, 53', 52), or between the front and rear axles respectively, so that a pivoting movement is not obstructed by either a front or a rear axle of said chassis (4; 34; 54).

12. Child carriage chassis according to one of claims 7 to 11, **characterised in that** said chassis (4; 34; 54) or its longitudinal beams (8; 58) are divided into a front (59) and a back region (60) by the respective two lateral mounting elements (14; 36; 61) for each pair of said links (18, 19; 40, 41; 66, 67) and/or by the lower articulation points (17; 39; 65) of said parallel links (18, 19; 40, 41; 66, 67).

13. Child carriage chassis according to claim 11 or 12, **characterised in that** provided behind the respective two lateral mounting elements (14; 36; 61) for each pair of said links (18, 19; 40, 41, 66, 67) and/or behind the lower articulation points (17; 39; 65) of said parallel links (18, 19; 40, 41; 66, 67) is a respective rearwardly projecting rocker arm (72), to the free end of which a respective rear wheel (2; 32; 52) is journaled.

14. Child carriage chassis according to claim 13, **characterised in that** said two rocker arms (72) are resiliently mounted relative to the respective said mounting element (14; 36; 61).

15. Child carriage chassis according to one of claims 11 to 14, **characterised in that** provided in front of each of the two said lateral mounting elements (14; 36; 61) for each pair of links (18, 19; 40, 41; 66, 67) and/or in front of each of said lower articulation points (17; 39; 65) of said parallel links (18, 19; 40, 41; 66, 67) is a forwardly projecting strut (59), in the region of the free end of which at least one front wheel (3, 33; 53, 53') is journaled.

16. Child carriage chassis according to one of the preceding claims, **characterised in that** provided in the region of a said articulation point (17, 24; 39; 65), preferably to said chassis (4; 34; 54) is an arrangement for locking the folding mechanism (7; 37; 57) in the raised position.

17. Child carriage chassis according to claim 16, **characterised in that** said locking arrangement comprises at least one element that encroaches into the region of movement of at least one said link (18, 19; 40, 41; 66, 67).

18. Child carriage chassis according to claim 17, **characterised in that** said element encroaching into the region of movement of a said link (18, 19: 40, 41; 66,679 is retractable from said region of movement.

19. Child carriage chassis according to claim 17 or 18, **characterised in that** said element encroaching into the region of movement of a said link (18, 19; 40, 41; 66, 67) is pushed or pulled into said region of movement of said link (18, 19; 40, 41; 66, 67) under the effect of a spring or a latching mechanism.

20. Child carriage chassis according to one of claims 17 to 19, **characterised in that** said element encroaching into the region of movement of a said link (18, 19; 40, 41; 66, 67) is manually retractable from said region of movement by means of an actuating element (73).

21. Child carriage chassis according to one of claims 17 to 20, **characterised in that** said element encroaching in the region of movement of a said link (18, 19; 40, 41; 66, 67) is configured as a bolt that is coaxial with a tubular link (18, 19; 40, 41; 66, 67) in the upwardly pivoted position thereof.

22. Child carriage chassis according to one of the preceding claims, **characterised in that** one of the two said links (18, 19; 40, 41; 66, 67) of a pair is extended (25) beyond its point of articulation (24) to said superstructure chassis (5; 35; 55).

23. Child carriage chassis according to claim 22, **characterised in that** the extensions (25) of two links are configured as a push bar (26).

24. Child carriage chassis according to claim 23, **characterised in that** said push bar is adjustable in length by means of articulated and/or telescoping joints.

25. Child carriage chassis according to claim 23 or 24, **characterised in that** the region (25) of an extended link (18, 19; 40, 41, 66, 67) located beyond said support chassis (5; 35; 55) and developed into a push bar (26) forms an angle with its region between said support chassis (5; 35; 55) and said chassis (4; 34; 54) that is equal to more than 45°, preferably more than 60°, particularly more than 90°.

26. Child carriage chassis according to one of claims 23 to 25, **characterised in that** said folding mechanism (7; 37; 57) is configured such that said push bar (26) pivots over and past said support chassis (5; 35, 55) during erecting and/or collapsing.

## Revendications

1. Armature pliante (1 ; 31 ; 51) pour un landau avec un châssis (4 ; 34 ; 54) présentant plusieurs roues (2, 3 ; 32, 33 ; 52, 53, 53'), un cadre porteur (5 ; 35 ; 55) de la construction (6), en particulier un siège, une nacelle, un sac ou sim. pour un enfant, ainsi qu'un mécanisme de pliage interposé (7 ; 37 ; 57) afin de pouvoir modifier la distance entre le cadre porteur (5 ; 35 ; 55) de la construction (6) et le châssis (4 ; 34 ; 54), où le mécanisme de pliage (7 ; 37 ; 57) présente au moins deux biellettes parallèles l'une par rapport à l'autre (18, 19 ; 40, 41 ; 66, 67) qui, sous forme d'une tringlerie parallélogramme approximativement plane, sont articulées d'une part au niveau du châssis (4 ; 34 ; 54) et, d'autre part, au niveau du cadre porteur (5 ; 35 ; 55) et pouvant respectivement pivoter autour d'axes, lesquels traversent approximativement à la verticale le plan de la tringlerie parallélogramme, **caractérisée en ce que** les points d'articulation correspondants, c.-à-d. à la fois les points d'articulation supérieurs ou à la fois les points d'articulation inférieurs (17, 24 ; 39 ; 65) des biellettes (18, 19 ; 40, 41 ; 66, 67) situées approximativement dans un plan commun sont l'un par rapport à l'autre plus décalés dans le sens vertical que dans le sens horizontal de façon que l'axe de liaison entre ces points d'articulation (17, 24 ; 39 ; 65) soit relativement incliné ou, dans le cas limite, vertical.

2. Armature de landau selon la revendication 1, **caractérisée en ce que** les dimensions extérieures horizontales (longueur, largeur) du cadre porteur (5 ; 35 ; 55) sont inférieures aux dimensions intérieures correspondantes d'une encoche dans la partie supérieure du châssis (4 ; 34 ; 54) de façon à ce que le cadre porteur (5 ; 35 ; 55) lors du pliage de l'armature du landau (1 ; 31 ; 51) s'intègre/puisse s'intégrer dans le châssis (4 ; 34 ; 54).

3. Armature de landau selon la revendication 1 ou 2, **caractérisée en ce que** le cadre porteur (5 ; 35 ; 55) est entre les biellettes (18, 19 ; 40, 41 ; 66, 67).

4. Armature de landau selon l'une des revendications 1 à 3, **caractérisée en ce que** la distance mesurée parallèlement par rapport à un axe de roue entre deux biellettes (18, 19 ; 40, 41 ; 66, 67) sur les côtés opposés de l'armature du landau (1 ; 31 ; 51) est inférieure à la distance mesurée correspondante entre deux stabilisations du châssis (4 ; 34 ; 54) qui sont approximativement latérales dans le sens de marche.

5. Armature de landau selon l'une des revendications précédentes, **caractérisée en ce qu'**une biellette (18, 19 ; 40, 41 ; 66, 67) est articulée de façon telle qu'elle balaie un angle de pivotement de plus de 120°, de préférence de plus de 135 °, en particulier de plus de 150 ° entre la position pliée et dépliée de l'armature du landau (1 ; 31 ; 51).

6. Armature de landau selon l'une des revendications précédentes, **caractérisée en ce que** le mécanisme de pliage (7 ; 37 ; 57) est tel que les extrémités des biellettes (18, 19 ; 40, 41 ; 66, 67), qui ne sont pas articulées au niveau du châssis (7 ; 37 ; 57), se trouvent au-dessus de leurs points d'articulation (39 ; 65) au niveau du châssis (4 ; 34 ; 54) en position dépliée de l'armature du landau (1 ; 31 ; 51), mais en dessous de ces points d'articulation (39 ; 65) en position pliée.

7. Armature de landau selon l'une des revendications précédentes, **caractérisée en ce qu'**à la fois les deux biellettes (18, 19 ; 40, 41 ; 66, 67) sur le même côté de l'armature du landau (1 ; 31 ; 51) sont articulées sur un élément de support commun (14 ; 36 ; 61) du châssis (4 ; 34 ; 54).

8. Armature de landau selon la revendication 7, **caractérisée en ce qu'**un élément de fixation (14 ; 36 ; 61) du châssis (4 ; 34 ; 54) est réalisé par une patte de fixation (14) ou deux pattes, de préférence parallèles l'une par rapport à l'autre (38), sur laquelle ou entre lesquelles les biellettes en question (18, 19 ; 40, 41 ; 66, 67) sont articulées en pouvant être amenées à pivoter.

9. Armature de landau selon la revendication 8, **caractérisée en ce que** deux pattes de fixation (14 ; 36 ; 61) du châssis (4 ; 34 ; 54) associées aux mêmes biellettes (18, 19 ; 40, 41 ; 66, 67) forment les faces latérales d'une fourche ou d'un profilé d'une section en U.

10. Armature de landau selon l'une des revendications 7 à 9, **caractérisée en ce que** les points d'articulation (17, 24 ; 39 ; 65) des deux biellettes (18, 19 ; 40, 41 ; 66, 67) d'une paire sont superposés approximativement verticalement sur l'élément de fixation correspondant (14 ; 36 ; 61).

11. Armature de landau selon l'une des revendications précédentes, **caractérisée en ce que** les éléments de fixation (14 ; 36 ; 61) et/ou les points d'articulation inférieurs (17 ; 39 ; 65) des biellettes parallèles (18, 19 ; 40, 41 ; 66, 67) sont entre les roues avant et arrière (3, 2 ; 33, 32 ; 53, 53', 52) ou entre l'axe avant et arrière de façon qu'un mouvement de pivotement ne soit entravé ni par un axe avant ni par un axe arrière du châssis (4 ; 34 ; 54).

12. Armature de landau selon l'une des revendications 7 à 11, **caractérisée en ce que** le châssis (4 ; 34 ; 54) ou ses longerons (8 ; 58) est divisé en une zone avant (59) et une zone arrière (60) par les deux éléments de fixation latéraux (14 ; 36 ; 61) pour respectivement une paire de biellettes (18, 19 ; 40, 41 ; 66, 67) et/ou les points d'articulation inférieurs (17; 39; 65) des biellettes parallèles (18, 19 ; 40, 41 ; 66, 67).

13. Armature de landau selon la revendication 11 ou 12, **caractérisée en ce qu'**à l'arrière des deux éléments de fixation latéraux (14 ; 36 ; 61) pour respectivement chaque paire de biellettes (18, 19 40, 41 ; 66, 67) et/ou à l'arrière des points d'articulation inférieurs (17 ; 39 ; 65) des biellettes parallèles (18, 19 ; 40, 41 ; 66, 67) est prévu respectivement un bras oscillant saillant vers l'arrière (72) sur l'extrémité libre duquel est montée respectivement une roue arrière (2 ; 32 ; 52).

14. Armature de landau selon la revendication 13, **caractérisée en ce que** les deux bras oscillants (72) par rapport à l'élément de fixation en question (14 ; 36 ; 61) sont amortis.

15. Armature de landau selon l'une des revendications 11 à 14, **caractérisée en ce qu'**à l'avant des deux éléments de fixation latéraux (14 ; 36 ; 61) pour respectivement chaque paire de biellettes (18, 19 ; 40, 41 ; 66, 67) et/ou à l'avant des points d'articulation inférieurs (17 ; 39 ; 65) des biellettes parallèles (18, 19 ; 40, 41 ; 66, 67) est prévue respectivement une barre de renfort saillante vers l'avant (59), sur l'extrémité libre de laquelle est montée respectivement au moins une roue avant (3 ; 33 ; 53 ; 53').

16. Armature de landau selon l'une des revendications précédentes, **caractérisée en ce qu'**un dispositif pour le blocage du mécanisme de pliage (7 ; 37 ; 57) en position relevée est prévu dans la zone d'un point d'articulation (17, 24 ; 39 ; 65), de préférence sur le châssis (4 ; 34 ; 54),.

17. Armature de landau selon la revendication 16, **caractérisée en ce que** le dispositif de blocage présente au moins un élément s'engageant dans la zone de mouvement d'au moins une biellette (18, 19 ; 40, 41 ; 66, 67).

18. Armature de landau selon la revendication 17, **caractérisée en ce que** l'élément s'engageant dans la zone de mouvement d'une biellette (18, 19 ; 40, 41 ; 66, 67) peut être retiré de cette zone de mouvement.

19. Armature de landau selon la revendication 17 ou 18, **caractérisée en ce que** l'élément s'engageant dans la zone de mouvement d'une biellette (18, 19 ; 40, 41 ; 66, 67) est actionné ou retiré sous l'action d'un ressort ou d'un mécanisme de verrouillage dans la zone de mouvement de la biellette (18, 19 ; 40, 41 ; 66, 67).

20. Armature de landau selon l'une des revendications 17 à 19, **caractérisée en ce que** l'élément s'engageant dans la zone de mouvement d'une biellette (18, 19 ; 40, 41 ; 66, 67) peut être retiré manuellement de cette zone de mouvement par l'intermédiaire d'un élément de commande (73).

21. Armature de landau selon l'une des revendications 17 à 20, **caractérisée en ce que** l'élément s'engageant dans la zone de mouvement d'une biellette (18, 19 ; 40, 41 ; 66, 67) est réalisé sous forme de pivot coaxial correspondant à une biellette tubulaire (18, 19 ; 40, 41 ; 66, 67) dans sa position relevée.

22. Armature de landau selon l'une des revendications précédentes, **caractérisée en ce que** l'une des deux biellettes (18, 19 ; 40, 41 ; 66, 67) d'une paire est prolongée (25) au-delà de son point d'articulation (24) sur le cadre porteur (5 ; 35 ; 55).

23. Armature de landau selon la revendication 22, **caractérisée en ce que** les prolongations (25) des deux biellettes sont réalisées sous forme d'étrier coulissant (26).

24. Armature de landau selon la revendication 23, **caractérisée en ce que** l'étrier coulissant est réglable en longueur par des liaisons articulées ou télescopiques.

25. Armature de landau selon la revendication 23 ou 24, **caractérisée en ce que** la zone (25) réalisée sous forme d'étrier coulissant (26) située au-delà du cadre porteur (5 ; 35 ; 55) d'une biellette prolongée (18, 19 ; 40, 41 ; 66, 67) dont la zone entre le cadre porteur (5 ; 35 ; 55) et le châssis (4 ; 34 ; 54) comprend un angle de plus de 45 °, de préférence de plus de 60 °, en particulier de plus de 90 °.

26. Armature de landau selon l'une des revendications 23 à 25, **caractérisée en ce que** le mécanisme de pliage (7 ; 37 ; 57) est tel que l'étrier coulissant (26) pivote par-dessus le cadre porteur (5 ; 35 ; 55) lors du dépliage et/ou du pliage.
